# FASCICULE DE BREVET EUROPEEN

(11) **EP 2 959 317 B1**
(45) Date de publication et mention de la délivrance du brevet: **23.11.2016**
(21) Numéro de dépôt: 14704815.1
(22) Date de dépôt: 18.02.2014
(51) Int. Cl.: G01T 1/24, G01T 1/40

(54) **PROCEDE D'ASSERVISSEMENT DU GAIN ET DU ZERO D'UN DISPOSITIF DE COMPTAGE DE PHOTONS A PIXELS MULTIPLES, ET SYSTEME DE MESURE DE LUMIERE METTANT EN OEUVRE CE PROCEDE**
VERFAHREN ZUR REGELUNG VON VERSTÄRKUNG UND NULL EINER MULTIPIXEL-PHOTONENZÄHLERVORRICHTUNG UND LICHTMESSSYSTEM MIT DIESEM VERFAHREN
METHOD FOR CONTROLLING THE GAIN AND ZERO OF A MULTI-PIXEL PHOTON COUNTER DEVICE, AND LIGHT-MEASURING SYSTEM IMPLEMENTING SAID METHOD

(30) Priorité: 22.02.2013 FR 1351588
(43) Date de publication de la demande: 30.12.2015
(73) Titulaire: AREVA NC, 92400 Courbevoie (FR)
(72) Inventeur: FONTBONNE, Jean-Marc, F-14000 Caen (FR); COLIN, Jean, F-14440 Douvres-la-Delivrande (FR); FONTBONNE, Cathy, F-14000 Caen (FR); JEHANNO, Jacky, F-30330 Gaujac (FR)
(74) Mandataire: Brevalex
(86) Numéro de dépôt international: PCT/EP2014/053074
(87) Numéro de publication internationale: WO 2014/128101

(56) Documents cités:
- WO-A2-2012/158922
- US-A- 3 800 143
- MARROCCHESI P S ET AL: "Active control of the gain of a 3 mm * 3 mm Silicon PhotoMultiplier", NUCLEAR INSTRUMENTS & METHODS IN PHYSICS RESEARCH, SECTION A (ACCELERATORS, SPECTROMETERS, DETECTORS AND ASSOCIATED EQUIPMENT) ELSEVIER SCIENCE B.V. NETHERLANDS, vol. 602, no. 2, 21 avril 2009 (2009-04-21), pages 391-395, XP002718305, ISSN: 0168-9002 cité dans la demande

## Description

### DOMAINE TECHNIQUE

La présente invention concerne un procédé d'asservissement du gain et du zéro d'un dispositif de comptage de photons à pixels multiples, en particulier d'un détecteur de type MPPC (marque déposée par Hamamatsu Photonics K.K), c'est-à-dire d'un détecteur de type compteur de photons multi-pixels (en anglais, *multi-pixel photon counter*).

Elle concerne aussi un système de mesure de lumière mettant en oeuvre ce procédé.

Elle s'applique notamment à la cytométrie de flux, à la physique des hautes énergies et au domaine de l'instrumentation de physique nucléaire.

### ÉTAT DE LA TECHNIQUE ANTÉRIEURE

On connaît déjà un procédé d'asservissement du gain d'un détecteur de type MPPC^{®} par le document suivant auquel on se reportera :
P.S. Marrocchesi et al., Active control of the gain of a 3 mm x 3 mm silicon photomultiplier, Nuclear Instruments and Methods in Physics Research A 602 (2009), pp. 391-395**.**

Le procédé connu par ce document consiste à asservir thermiquement le détecteur MPPC^{®}.

Ce procédé connu présente un inconvénient : il ne permet pas d'utiliser le détecteur MPPC^{®} dans un environnement quelconque. On connaît aussi de WO2012158922 un autre procédé d'asservissement du gain d'un dispositif de comptage de photons à pixels multiples.

### EXPOSÉ DE L'INVENTION

La présente invention a pour but de remédier à cet inconvénient.

Pour ce faire, le procédé d'asservissement, objet de l'invention, n'utilise pas le paramètre « température ». Et, comme on le verra même mieux par la suite, ce procédé utilise même un défaut du détecteur MPPC^{®}, à savoir le comptage simultané des électrons d'agitation thermique.

De façon précise, la présente invention a pour objet un procédé selon la revendication 1 d'asservissement du gain d'un détecteur MPPC^{®}, et d'un dispositif de comptage de photons à pixels multiples selon la revendication 6. Ce dispositif comprend classiquement une matrice de photodiodes à avalanche fonctionnant en mode Geiger, est alimenté en tension et fournit un signal lorsqu'il détecte des photons.

Le procédé est caractérisé en ce que :
- on acquiert les signaux fournis par le dispositif pendant des périodes prédéfinies, jusqu'à atteindre un temps total de mesure prédéfini,
- on forme un histogramme d'amplitude, comportant un ensemble de pics, à partir des signaux ainsi acquis,
et pour lequel l'amplitude est portée en abscisses et un nombre de photoélectrons ou d'électrons d'agitation thermique est portée en ordonnées,
- on détermine les positions respectives de deux pics consécutifs, mesurables sur l'histogramme,
- on produit un signal d'erreur qui est égal à l'écart entre les deux pics consécutifs, et
- au moyen du signal d'erreur, on régule la tension qui alimente le dispositif, de manière à maintenir l'écart égal à une valeur de consigne prédéfinie.

Selon un mode de réalisation préféré du procédé objet de l'invention, les périodes prédéfinies sont égales les unes aux autres et choisies dans un intervalle allant de 50 ns à 500 ns.

De préférence, le temps total de mesure prédéfini est choisi dans un intervalle allant de 0,5 s à 10 s.

Selon un mode de réalisation préféré de l'invention, les deux pics consécutifs sont les premier et deuxième pics de l'histogramme.

La présente invention concerne aussi un système de mesure de lumière, mettant en oeuvre le procédé, objet de l'invention. Ce système comprend :
- le dispositif de comptage de photons,
- un dispositif d'alimentation pour fournir la haute tension au dispositif de comptage de photons,
- un dispositif d'amplification pour amplifier les signaux fournis par le dispositif à comptage de photons et fournir des signaux amplifiés, et
- un dispositif de traitement pour acquérir les signaux amplifiés et traiter ceux-ci de manière à compter les photons, et pour former l'histogramme, déterminer les deux pics consécutifs et produire le signal d'erreur, et
- un dispositif de régulation pour commander le dispositif d'alimentation en régulant la tension à partir du signal d'erreur.

La présente invention concerne en outre un autre système de mesure de lumière, mettant en oeuvre le procédé objet de l'invention. Cet autre système comprend :
- le dispositif de comptage de photons,
- un dispositif d'alimentation pour fournir la haute tension au dispositif de comptage de photons,
- des premier et deuxième dispositifs d'amplification montés en série, pour amplifier les signaux fournis par le dispositif de comptage de photons et fournir des signaux amplifiés,
- un premier dispositif de traitement pour acquérir les signaux amplifiés par le premier dispositif d'amplification, former l'histogramme, déterminer les deux pics consécutifs et produire le signal d'erreur,
- un dispositif de régulation pour commander le dispositif d'alimentation en régulant la tension à partir du signal d'erreur, et
- un deuxième dispositif de traitement pour traiter les signaux amplifiés, issus du deuxième dispositif d'amplification, de manière à compter les photons.

### BRÈVE DESCRIPTION DES DESSINS

La présente invention sera mieux comprise à la lecture de la description d'exemples de réalisation donnés ci-après, à titre purement indicatif et nullement limitatif, en faisant référence aux dessins annexés sur lesquels :
- la figure 1 illustre schématiquement un circuit électronique comportant un détecteur de type MPPC^{®} associé à un amplificateur,
- la figure 2 illustre schématiquement un autre circuit électronique comportant un détecteur de type MPPC^{®} associé à deux amplificateurs,
- la figure 3 illustre schématiquement un exemple de signal que l'on peut observer sur un oscilloscope et qui est issu d'un détecteur de type MPPC^{®},
- la figure 4 illustre schématiquement un exemple d'histogramme d'amplitude qui est utilisé dans l'invention,
- la figure 5 est un graphe qui illustre la dépendance de tels histogrammes à la tension appliquée à un détecteur de type MPPC^{®}, pour une température fixe de celui-ci, et
- les figures 6 et 7 sont des vues schématiques de deux exemples du système, objet de l'invention.

### EXPOSÉ DÉTAILLÉ DE MODES DE RÉALISATION PARTICULIERS

On donne ci-après divers exemples du procédé, objet de l'invention, permettant de stabiliser le gain et le zéro d'un détecteur de type MPPC^{®}. On rappelle que la réponse d'un tel détecteur dépend de la haute tension qui lui est appliquée et de la température à laquelle il est soumis.

On sait de plus qu'un détecteur de type MPPC^{®} présente un défaut : il « compte » naturellement et simultanément des électrons d'agitation thermique, et ce, plusieurs centaines de milliers de fois par seconde. C'est ce défaut qui est utilisé dans la présente invention pour la stabilisation du gain du détecteur à un niveau choisi par l'utilisateur, et pour la mesure du zéro de ce détecteur (absence de lumière ou de signal). Dès lors, toute mesure faite par le détecteur de type MPPC^{®} peut être exprimée, de façon absolue, en nombre de photoélectrons incidents, sur une large gamme d'entrée, et ce, quelle que soit la température de fonctionnement.

Rappelons, tout d'abord, quelques caractéristiques d'un détecteur de type MPPC^{®}. Au sujet de ce dernier, on peut se reporter au document suivant :
**MPPC^{®} Multi-pixel photon counter, compact opto-semiconductors with excellent photon counting capability, Hamamatsu, Cat. N°. KAP D0002E09, mai 2012.**

Un tel détecteur comporte une matrice de photodiodes à avalanche de petites dimensions, qui sont physiquement séparées les unes des autres mais disposées sur un même substrat de silicium. Lorsqu'un photon incident interagit sur l'une quelconque de ces photodiodes élémentaires, celle-ci produit un signal électrique dont la charge est très reproductible d'une interaction à l'autre. Cela confère à un détecteur de type MPPC^{®} des performances exceptionnelles de mesure d'un « photon unique ». Quand N photons interagissent simultanément à la surface du détecteur MPPC^{®}, sur des sites de photodiodes différents, on récupère un signal dont la charge représente, en moyenne, N fois la charge élémentaire précédente. Le détecteur MPPC^{®} peut donc être utilisé pour mesurer le nombre de photons qui parviennent simultanément à sa surface.

La difficulté à laquelle on est confronté lors de l'usage d'un tel détecteur est liée à la physique de l'avalanche qui se produit dans les photodiodes. Cette avalanche dépend très fortement de la tension de déplétion qui permet de polariser le détecteur, ainsi que de la température du détecteur lui-même. De ce fait, il est généralement conseillé d'asservir thermiquement ce détecteur de façon à éliminer l'influence de la température. Mais cela va à l'encontre d'un usage d'un détecteur de type MPPC^{®} dans un environnement quelconque.

Par ailleurs, les photodiodes élémentaires du détecteur MPPC^{®} sont constituées de silicium. De ce fait, elles libèrent naturellement, par agitation thermique, des électrons qui sont traités de la même façon que les photoélectrons produits par la lumière incidente. Ces électrons thermiques ont donc une « signature » identique à celle de ces photoélectrons. Le nombre d'électrons thermiques par unité de temps dépend à la fois de la température et de la haute tension appliquée (mais de façon marginale pour cette dernière). En outre, un détecteur MPPC^{®} « compte » naturellement plusieurs centaines de milliers à plusieurs millions de coups par seconde en dessous du seuil de photon unique. Cet aspect peut paraître en premier lieu négatif, mais c'est lui que l'on utilise, de façon paradoxale, pour asservir le gain d'un détecteur de type MPPC^{®}.

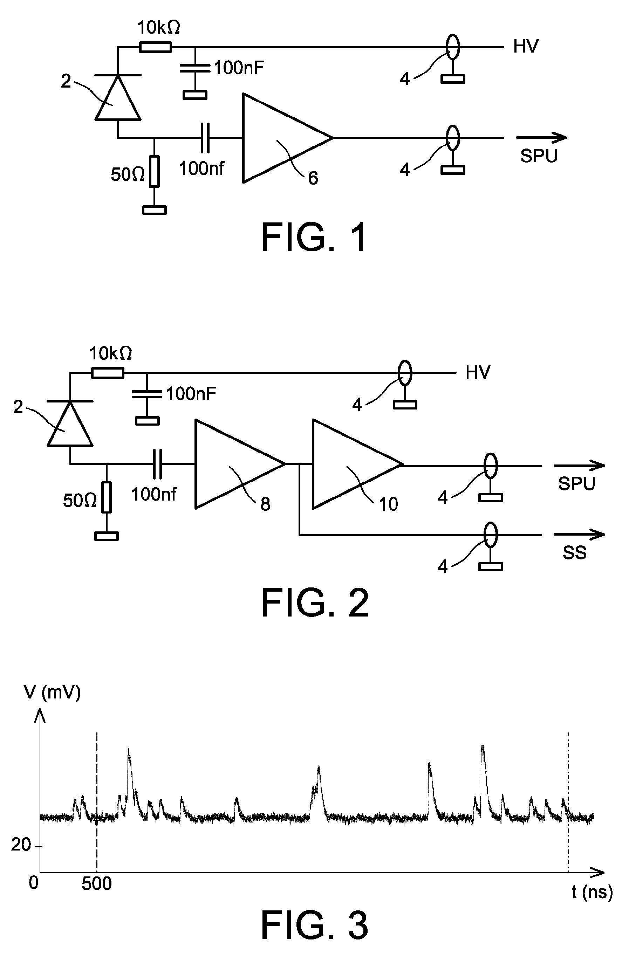

La figure 1 illustre schématiquement le circuit qui est préconisé par la Société Hamamatsu pour utiliser un détecteur MPPC^{®}. Ce dernier a la référence 2 sur la figure 1. Sur celle-ci, comme sur la figure 2, la référence 4 désigne des connecteurs de type BNC. La référence HV désigne la tension (de l'ordre de 70V) qui alimente le détecteur MPPC^{®}. Le courant engendré par celui-ci est envoyé à un amplificateur 6 dont le gain vaut 100 et qui est adapté en impédance. Le circuit représenté produit un signal SPU de plusieurs millivolts (10 mV à 20 mV dans l'exemple) lorsqu'un photoélectron ou un électron d'agitation thermique est détecté par le détecteur MPPC^{®}.

Compte tenu des limitations dynamiques du circuit représenté sur la figure 1, on préfère utiliser le circuit représenté schématiquement sur la figure 2 dans la présente invention.

Comme on le voit, ce circuit comprend un premier amplificateur 8 dont le gain vaut 10. Cela permet au circuit de fonctionner même si un très grand nombre de photons atteignent le détecteur MPPC^{®}. Le premier amplificateur 8 est suivi par un deuxième amplificateur 10 dont le gain vaut 10. Cet amplificateur 10 fournit le signal SPU qui correspond à un photoélectron unique et a un niveau de tension facilement exploitable (10 mV à 20 mV). A la sortie du premier amplificateur 8, on récupère un signal SS dont le niveau de tension est de l'ordre de 1 mV à 2 mV et qui constitue, par exemple, le moyen de mesurer un très grand nombre de photoélectrons, reçus de façon inpulsionnelle pendant un temps court.

Le signal acquis sur les sorties analogiques des circuits représentés sur les figures 1 et 2 peut être observé sur un oscilloscope. On obtient alors un signal du genre de celui qui est représenté sur la figure 3.

Il s'agit d'un oscillogramme-type d'un détecteur MPPC^{®}, obtenu à la sortie d'un préamplificateur de tension dont le gain est égal à 100 et qui est adapté sur 50 Q. Le temps t est porté en abscisses et exprimé en nanosecondes. La tension V est portée en ordonnées et exprimée en millivolts. Pour chaque impulsion, on peut mesurer soit l'amplitude maximale du signal, soit la charge délivrée par le détecteur. Cette charge correspond à l'intégration du signal pendant une durée qui est définie par l'utilisateur et va, typiquement, de quelques nanosecondes avant l'instant de déclenchement jusqu'à une centaine de nanosecondes après cet instant, l'instant de déclenchement étant défini par l'instant où le signal dépasse un seuil donné par l'utilisateur, typiquement quelques millivolts au dessus du bruit de fond.

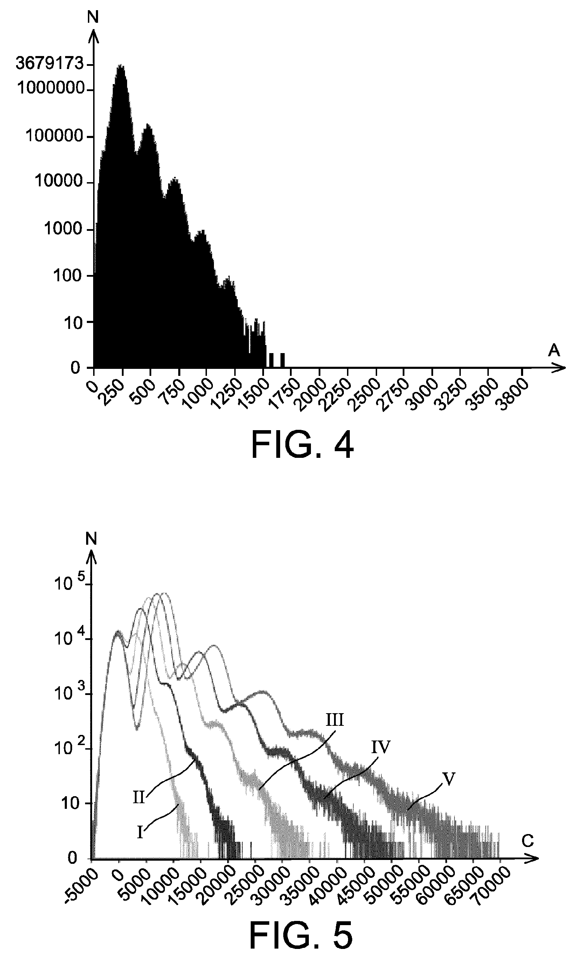

On obtient ainsi des histogrammes d'amplitude. Ils correspondent à l'accumulation des mesures sur un temps donné, qui est typiquement de l'ordre de 1 s, et sont du genre de l'histogramme qui est représenté sur la figure 4.

Sur cette figure 4, on a porté, en abscisses, l'amplitude codée A (en unités arbitraires) et en ordonnées, le nombre N de coups mesurés, à l'amplitude donnée, sur la période d'accumulation de 1s mentionnée ci-dessus.

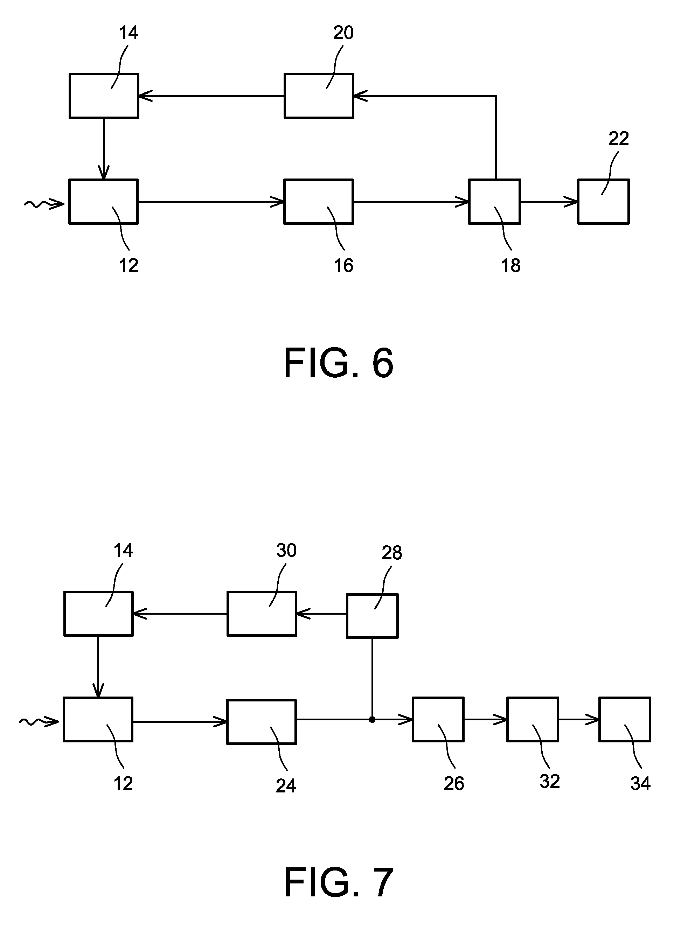

On voit une succession de pics sur la figure 4. Le premier pic correspond à un photoélectron ou un électron d'agitation thermique. Le deuxième pic correspond à deux unités, c'est-à-dire à deux photoélectrons ou deux électrons d'agitation thermique, ... etc. Le seuil de déclenchement du système d'acquisition de données (correspondant au dispositif 18 de la figure 6) est situé à un niveau de l'ordre de 0,2 unité dans l'exemple représenté.

Lorsque la tension appliquée au détecteur MPPC^{®} ou la température de ce dernier varient, les histogrammes enregistrés changent radicalement. Le graphe de la figure 5 illustre la dépendance des histogrammes à la tension, pour une température fixe du détecteur MPPC^{®}.

Sur cette figure 5, on a porté, en abscisses, la charge mesurée C (en unités arbitraires) et en ordonnées, le nombre N de coups mesurés, à l'amplitude donnée, sur la période d'accumulation de 1s mentionnée ci-dessus. Et les courbes I, II, III, IV et V correspondent respectivement aux tensions 70 V ; 70,2 V ; 70,4 V; 70,6 V et 70,8 V.

On constate notamment que toute modification de l'une des grandeurs d'influence (tension appliquée au détecteur MPPC^{®} ou température de celui-ci) a pour conséquence de décaler la position des pics ainsi que le nombre de coups qu'ils contiennent. Ainsi, par exemple, un « coup » porté au canal 55000 correspondrait à 8 photoélectrons pour une tension de 70,6 V alors qu'il serait comptabilisé pour 18 photoélectrons pour une haute tension de 70 V.

Cette dépendance se traduit également, par exemple, par un doublement approximatif du nombre de coups pour chaque incrément de 7°K sur la température du détecteur MPPC^{®}, couplé à une diminution de l'ordre de 40 à 50% du gain du détecteur MPPC^{®}. Lorsque ce dernier n'est pas thermostaté, son usage impose donc l'asservissement de son gain, ou du moins la mesure de ce gain, afin de compenser cette dépendance.

Dans ce qui suit, on donne quelques exemples du procédé, objet de l'invention, permettant de ramener ces variations à un niveau raisonnable, égal à quelques pourcents, dans les conditions de température qui sont généralement constatées lors d'un travail dans une boîte à gants, c'est-à-dire pour une température qui varie entre environ 20°C et environ 40°C.

Selon un exemple du procédé d'asservissement du gain, objet de l'invention, on mesure, par un moyen quelconque (par exemple : ajustement du spectre par des gaussiennes ou localisation des maxima), la position des pics correspondant à 0, 1, 2, etc... électrons amplifiés et l'on produit un signal d'erreur sur la position de ces pics. Ce signal d'erreur est utilisé pour contre-réactionner la tension qui est appliquée au détecteur MPPC^{®}.

Suivant le système dont on dispose pour exploiter le signal fourni par le détecteur MPPC^{®}, le pic correspondant au « 0 », c'est-à-dire correspondant à une absence de signal, peut être correctement mesuré ou pas. Si cette mesure est correcte, il suffit de relever la position du pic numéro 1, ou premier pic, pour corriger le système de mesure, incorporant le détecteur MPPC^{®}. En fait, il s'agit là d'un cas d'école qui fonctionne mal avec les détecteurs MPPC^{®}, à cause du fort taux de comptage d'obscurité de ceux-ci.

Dans le cas contraire, on peut exploiter simultanément le pic numéro 1, ou premier pic, et le pic numéro deux, ou deuxième pic, ou toute combinaison de pics qui sont plus facilement mesurables que ces premier et deuxième pics. L'écart entre deux pics successifs permet de déterminer directement le gain du détecteur MPPC^{®} alors que la position relative de ces deux pics permet de déterminer la position du zéro du détecteur MPPC^{®}, sans avoir à mesurer directement cette position.

Pour que le procédé fonctionne correctement, la mesure des pics doit être effectuée dans un temps raisonnable, pendant lequel la température du détecteur MPPC^{®} ne varie pas ou varie suffisamment peu pour que cette variation puisse être négligée. Compte tenu du comptage d'obscurité des détecteurs MPPC^{®} (plusieurs centaines de milliers de coups par seconde), la mesure et la correction peuvent être effectuées en quelques fractions de seconde, avec un niveau d'incertitude de l'ordre de 1%.

L'utilisateur peut ainsi définir une consigne de sensibilité. L'unité de calcul qui est utilisée pour mettre en oeuvre le procédé mesure la sensibilité en relevant l'écart entre deux pics identifiés et produit un signal d'erreur entre la consigne et la mesure. Ce signal d'erreur est ensuite envoyé à un dispositif de correction qui peut être, par exemple, un simple correcteur PID (correcteur proportionnel intégral et dérivé) et qui commande la valeur de la tension appliquée au détecteur MPPC^{®}. Après un certain temps, défini par le réglage du correcteur, la tension appliquée au détecteur MPPC^{®} se positionne à un niveau tel que l'écart entre les pics de référence correspond à la consigne définie par l'utilisateur. La sensibilité du détecteur MPPC^{®} est alors asservie et reste constante quelle que soit la température à laquelle on fait fonctionner le système de mesure incorporant le détecteur MPPC^{®}.

Comme le procédé d'asservissement permet de régler la sensibilité du détecteur MPPC^{®} et de mesurer la position du zéro de celui-ci, il est alors possible d'exprimer toute impulsion lumineuse en nombre de photoélectrons incidents plutôt qu'en unités arbitraires qui dépendent à la fois de la température et de la tension appliquée au détecteur MPPC^{®}. Le système de mesure incorporant ce dernier est alors calibré en nombre absolu de photoélectrons.

Dans un autre exemple de l'invention, on utilise une chaîne de mesure comprenant un détecteur MPPC^{®} suivi de moyens d'amplification des signaux qu'il fournit, eux-mêmes suivis de moyens d'acquisition. On acquiert les signaux fournis par le détecteur MPPC^{®} pendant des périodes qui peuvent aller de 50 ns à 500 ns et valent par exemple 100 ns, jusqu'à ce que le temps total d'acquisition atteigne une valeur comprise entre 0,5 s et 10 s, par exemple 1s. Ces acquisitions permettent de former un histogramme d'amplitude. Sur ce dernier, on relève les positions respectives des pics n° 1 et 2 : le pic n° 1 se situe par exemple au canal 250 et le pic n° 2 au canal 500.

Ensuite, l'asservissement commence. On produit un signal d'erreur, à savoir l'écart entre les pics n° 1 et 2, qui vaut 500-250, c'est-à-dire 250 dans l'exemple ci-dessus. Par ailleurs, on a choisi une valeur de consigne pour l'écart considéré, par exemple une valeur égale à 300. Comme 250 est inférieur à cette valeur, on augmente la tension appliquée au détecteur MPPC^{®} de façon à augmenter l'écart entre les deux pics. Plus précisément, le signal d'erreur utilisé est égal à la valeur de consigne diminuée de l'écart que l'on a trouvé entre les deux pics.

D'une manière générale, au lieu d'utiliser les deux premiers pics de l'histogramme d'amplitude, on utilise deux pics consécutifs de ce dernier, qui sont facilement mesurables.

Les moyens d'acquisition permettent d'obtenir les histogrammes d'amplitude et contiennent une unité de calcul qui détermine l'erreur égale à la valeur de consigne diminuée de l'écart entre les canaux respectifs des deux pics. Le signal d'erreur qui en résulte est envoyé vers des moyens de régulation qui commandent la tension appliquée au détecteur MPPC^{®}, de manière à maintenir constant le gain de celui-ci.

Le procédé que l'on vient d'expliquer est constamment mis en oeuvre dans la chaîne de mesure considérée.

On précise aussi que l'invention est de préférence mise en oeuvre à l'aide d'un circuit du genre de celui qui est représenté sur la figure 2 plutôt qu'un circuit du genre de celui qui est représenté sur la figure 1 : ce dernier conduirait à un signal trop important pour compter quelques milliers de photoélectrons parvenant simultanément, ou sur un intervalle de temps très court, à la surface du détecteur MPPC^{®}, réduisant ainsi la dynamique totale admissible.

La figure 6 est une vue schématique d'un premier exemple du système de mesure de lumière, objet de l'invention. Il comprend :
- un dispositif de comptage de photons 12, par exemple un détecteur MPPC^{®} (dont la matrice de photodiodes à avalanche, fonctionnant en mode Geiger n'est pas représentée),
- un dispositif d'alimentation en tension 14 pour fournir une tension d'alimentation au dispositif de comptage de photons 12,
- un amplificateur 16 pour amplifier les signaux fournis par le dispositif de comptage de photons 12, et
- un dispositif de traitement 18 pour acquérir les signaux amplifiés, former un histogramme, déterminer deux pics consécutifs et produire un signal d'erreur, comme on l'a vu plus haut.

Le système de la figure 6 comprend aussi un dispositif de régulation 20, par exemple de type PID, qui reçoit le signal d'erreur et commande le dispositif d'alimentation en tension 14 pour réguler la tension à partir du signal d'erreur.

En outre, dans l'exemple de la figure 6, le dispositif de traitement 18 est également prévu pour traiter les signaux amplifiés de manière à compter les photons. Ce dispositif 18 est muni d'un dispositif 22 d'affichage des résultats.

La figure 7 est une vue schématique d'un deuxième exemple du système de mesure de lumière, objet de l'invention. Il comprend :
- le dispositif de comptage de photons 12,
- le dispositif d'alimentation en tension 14, pour fournir la tension d'alimentation au dispositif de comptage de photons 12,
- des premier et deuxième amplificateurs 24 et 26 montés en série, pour amplifier les signaux fournis par le dispositif de comptage de photons 12,
- un premier dispositif de traitement 28 pour acquérir les signaux amplifiés par le premier amplificateur 24, former l'histogramme, déterminer les deux pics consécutifs et produire le signal d'erreur comme on l'a vu plus haut.

Le système de la figure 7 comprend aussi un dispositif de régulation 30, par exemple de type PID, qui reçoit le signal d'erreur et commande le dispositif d'alimentation en tension 14 pour réguler la tension à partir du signal d'erreur.

Le système de la figure 7 comprend aussi un deuxième dispositif de traitement 32 pour traiter les signaux amplifiés, issus du deuxième amplificateur 26, de manière à compter les photons. Ce dispositif 32 est muni d'un dispositif 34 d'affichage des résultats.

Le dispositif de comptage de photons, dont il a été question dans les exemples de l'invention, peut être un détecteur MPPC^{®} ou, plus généralement, tout dispositif de type SiPM (pour *Silicon PhotoMultiplier*) permettant d'avoir « naturellement » la génération d'un signal équivalent à un photoélectron et parfois à deux ou trois, de façon à « accrocher » l'asservissement, c'est-à-dire à permettre le commencement de celui-ci.

## Revendications

1. Procédé d'asservissement du gain d'un dispositif (12) de comptage de photons à pixels multiples, comprenant une matrice de photodiodes à avalanche, le dispositif étant alimenté en tension et fournissant un signal lorsqu'il détecte des photons, procédé **caractérisé en ce qu'**il comprend les étapes suivantes :
- acquisition des signaux fournis par le dispositif (12) pendant des périodes prédéfinies, jusqu'à atteindre un temps total de mesure prédéfini,
- formation d'un histogramme d'amplitude, comportant un ensemble de pics, à partir des signaux ainsi acquis, et pour lequel l'amplitude est portée en abscisses et un nombre de photoélectrons ou d'électrons d'agitation thermique est portée en ordonnées,
- détermination des positions respectives de deux pics consécutifs, mesurables sur l'histogramme,
- production d'un signal d'erreur qui est égal à l'écart entre les deux pics consécutifs, et
- au moyen du signal d'erreur, régulation de la tension qui alimente le dispositif (12), de manière à maintenir l'écart égal à une valeur de consigne prédéfinie.

2. Procédé selon la revendication 1, dans lequel les périodes prédéfinies sont égales les unes aux autres et choisies dans un intervalle allant de 50 ns à 500 ns.

3. Procédé selon l'une quelconque des revendications 1 et 2, dans lequel le temps total de mesure prédéfini est choisi dans un intervalle allant de 0,5 s à 10 s.

4. Procédé selon l'une quelconque des revendications 1 à 3, dans lequel les deux pics consécutifs sont les premier et deuxième pics de l'histogramme.

5. Procédé selon l'une quelconque des revendications 1 à 4, dans lequel on asservit le gain d'un dispositif constitué par un compteur de photons multi-pixels (12).

6. Système de mesure de lumière, mettant en oeuvre le procédé selon l'une quelconque des revendications 1 à 5, comprenant :
- le dispositif de comptage de photons (12), comprenant une matrice de photodiodes à avalanche,
- un dispositif d'alimentation (14) pour fournir la tension au dispositif de comptage de photons (12),
- un dispositif d'amplification (16) pour amplifier les signaux fournis par le dispositif de comptage de photons (12) et fournir des signaux amplifiés, le système étant **caractérisé en ce qu'**il comporte
- un dispositif de traitement (18) pour acquérir les signaux amplifiés et traiter ceux-ci de manière à compter les photons, et pour former l'histogramme, pour lequel l'amplitude est portée en abscisses et un nombre de photoélectrons ou d'électrons d'agitation thermique est portée en ordonnées, déterminer les deux pics consécutifs et produire le signal d'erreur, et
- un dispositif de régulation (20) pour commander le dispositif d'alimentation (14) en régulant la tension à partir du signal d'erreur.

7. Système de mesure de lumière, mettant en oeuvre le procédé selon l'une quelconque des revendications 1 à 5, comprenant :
- le dispositif de comptage de photons (12),
- un dispositif d'alimentation (14) pour fournir la tension au dispositif de comptage de photons (12),
- des premier et deuxième dispositifs d'amplification (24, 26) montés en série, pour amplifier les signaux fournis par le dispositif de comptage de photons (12) et fournir des signaux amplifiés, le système étant **caractérisé en ce qu'**il comporte
- un premier dispositif de traitement (28) pour acquérir les signaux amplifiés par le premier dispositif d'amplification (24), former l'histogramme, déterminer les deux pics consécutifs et produire le signal d'erreur,
- un dispositif de régulation (30) pour commander le dispositif d'alimentation (14) en régulant la tension à partir du signal d'erreur, et
- un deuxième dispositif de traitement (32) pour traiter les signaux amplifiés, issus du deuxième dispositif d'amplification (26), de manière à compter les photons.

## Patentansprüche

1. Verfahren zur Regelung einer Verstärkung einer Vorrichtung (12) zum Zählen von Photonen mit mehreren Pixeln, umfassend eine Matrix aus Lawinen-Photodioden, wobei die Vorrichtung mit Spannung versorgt wird und ein Signal liefert, wenn sie Photonen detektiert, das Verfahren **dadurch gekennzeichnet, dass** es die folgenden Schritte umfasst:
- Aufnehmen von von der Vorrichtung (12) gelieferten Signalen während vordefinierter Perioden bis zum Erreichen einer vordefinierten Gesamt-Messzeit,
- Bilden eines Amplituden-Histogramms, welches einen Satz von Spitzen umfasst, ausgehend von den derart aufgenommenen Signalen, und für welche die Amplitude als Abszisse und eine Anzahl von Photoelektronen oder thermischen Anregungselektronen als Ordinate aufgetragen ist,
- Bestimmen von jeweiligen Positionen von zwei aufeinander folgenden messbaren Spitzen in dem Histogramm,
- Erzeugen eines Abweichungssignals, welches gleich dem Abstand zwischen den beiden aufeinanderfolgenden Spitzen ist, und
- Mittels des Abweichungssignals, Regulieren der Spannung, welche die Vorrichtung (12) versorgt, um so den Abstand gleich einem vordefinierten Sollwert zu halten.

2. Verfahren nach Anspruch 1, wobei die vordefinierten Perioden zueinander gleich sind und aus einem Intervall ausgewählt sind, welches von 50 ns bis 500 ns läuft.

3. Verfahren nach einem der Ansprüche 1 und 2, wobei die Gesamt-Messzeit aus einem Intervall ausgewählt ist, welches von 0,5 s bis 10 s läuft.

4. Verfahren nach einem der Ansprüche 1 bis 3, wobei die beiden aufeinander folgenden Spitzen die ersten und zweiten Spitzen des Histogramms sind.

5. Verfahren nach einem der Ansprüche 1 bis 4, wobei die Verstärkung einer Vorrichtung geregelt wird, welche aus einem Multipixel-Photonenzähler (12) gebildet ist.

6. System zum Messen von Licht, welches das Verfahren nach einem der Ansprüche 1 bis 5 durchführt, umfassend:
- die Vorrichtung zum Zählen von Photonen (12), umfassend eine Matrix aus Lawinen-Photodioden,
- eine Versorgungsvorrichtung (14) zum Liefern der Spannung an die Vorrichtung zum Zählen von Photonen (12),
- eine Verstärkungsvorrichtung (16) zum Verstärken der von der Vorrichtung zum Zählen von Photonen (12) gelieferten Signale und zum Liefern von verstärkten Signalen, wobei das System **dadurch gekennzeichnet ist, dass** es umfasst:
- eine Verarbeitungsvorrichtung (18) zum Empfangen der verstärkten Signale und zum derartigen Verarbeiten von ihnen, dass die Photonen gezählt werden, und zum Bilden des Histogramms, für welches die Amplitude als Abszisse und eine Anzahl von Photoelektronen oder von thermischen Anregungselektronen als Ordinate aufgetragen ist, zum Bestimmen der beiden aufeinander folgenden Spitzen und dem Erzeugen des Abweichungssignals, und
- eine Regulierungsvorrichtung (20) zum Anweisen der Versorgungsvorrichtung (14), indem die Spannung ausgehend von dem Abweichungssignal reguliert wird.

7. System zum Messen von Licht, welches das Verfahren nach einem der Ansprüche 1 bis 5 durchführt, umfassend:
- die Vorrichtung zum Zählen von Photonen (12),
- eine Versorgungsvorrichtung (14) zum Liefern der Spannung an die Vorrichtung zum Zählen von Photonen (12),
- erste und zweite Verstärkungsvorrichtungen (24, 26), welche in Reihe angeordnet sind, zum Verstärken der von der Vorrichtung zum Zählen von Photonen (12) gelieferten Signale und Liefern von verstärkten Signalen,
wobei das System **dadurch gekennzeichnet ist, dass** es umfasst:
- eine erste Verarbeitungsvorrichtung (28) zum Empfangen der von der ersten Verstärkungsvorrichtung (24) verstärkten Signale, Bilden des Histogramms, Bestimmen der beiden aufeinander folgenden Spitzen und Erzeugen des Abweichungssignals,
- eine Regulierungsvorrichtung (30) zum Anweisen der Versorgungsvorrichtung (14), indem die Spannung ausgehend von dem Abweichungssignal reguliert wird, und
- eine zweite Verarbeitungsvorrichtung (32) zum Verarbeiten der verstärkten Signale, welche von der zweiten Verstärkungsvorrichtung (26) geliefert werden, derart, dass die Photonen gezählt werden.

## Claims

1. A method for controlling the gain of a multiple pixel photon counting device (12), comprising an array of avalanche photodiodes, the device being supplied with a voltage and providing a signal when it detects photons, which method is **characterized in that** it comprises the following steps of:
- acquiring the signals provided by the device (12) for predefined periods, until a predefined total measurement time is reached,
- forming an amplitude histogram, including a set of peaks, from the signals thus acquired, and for which the amplitude is drawn in abscissa and a number of photoelectrons or thermal agitation electrons is drawn in ordinate,
- determining the respective positions of two consecutive peaks, measurable on the histogram,
- producing an error signal which is equal to the deviation between both consecutive peaks, and
- by means of the error signal, regulating the voltage which supplies the device (12), so as to keep the deviation equal to a predefined set point.

2. The method according to claim 1, wherein the predefined periods are equal to each other and chosen in an interval ranging from 50ns to 500ns.

3. The method according to any of claims 1 and 2, wherein the predefined total measurement time is chosen in an interval ranging from 0.5s to 10s.

4. The method according to any of claims 1 to 3, wherein the two consecutive peaks are the first and second peaks of the histogram.

5. The method according to any of claims 1 to 4, wherein the gain of a device consisting of a multi-pixel photon counter (12) is controlled.

6. A light-measuring system, implementing the method according to any of claims 1 to 5, comprising:
- the photon counting device (12), comprising an array of avalanche photodiodes,
- a supply device (14) for providing the voltage to the photon counting device (12),
- an amplification device (16) for amplifying the signals provided by the photon counting device (12) and providing amplified signals,
the system being **characterized in that** it has:
- a processing device (18) for acquiring the amplified signals and processing the same so as to count the photons, and for forming the histogram, for which the amplitude is drawn in abscissa and a number of photoelectrons or thermal agitation electrons is drawn in ordinate, determining both consecutive peaks and producing the error signal, and
- a regulation device (20) for controlling the supply device (14) by regulating the voltage from the error signal.

7. A light-measuring system, implementing the method according to any of claims 1 to 5, comprising:
- the photon counting device (12),
- a supply device (14) for providing the voltage to the photon counting device (12),
- first and second amplification devices (24, 26) connected in series, for amplifying the signals provided by the photon counting device (12) and providing amplified signals,
the system being **characterized in that** it has:
- a first processing device (28) for acquiring the signals amplified by the first amplification device (24), forming the histogram, determining both consecutive peaks, and producing the error signal,
- a regulation device (30) for controlling the supply device (14) by regulating the voltage from the error signal, and
- a second processing device (32) for processing the amplified signals, from the second amplification device (26), so as to count the photons.
